# EUROPÄISCHE PATENTSCHRIFT

(11) **EP 4 380 821 B1**
(45) Veröffentlichungstag und Bekanntmachung des Hinweises auf die Patenterteilung: **09.07.2025**
(21) Anmeldenummer: 22757942.2
(22) Anmeldetag: 28.07.2022
(51) Int. Cl.: B60Q 1/50, G08G 1/095, B60Q 1/44, B60Q 1/30, G08G 1/0967, B60W 50/14

(54) **VERFAHREN ZUM BETRIEB EINES KRAFTFAHRZEUGS UND KRAFTFAHRZEUG**
METHOD FOR OPERATING A MOTOR VEHICLE, AND MOTOR VEHICLE
PROCÉDÉ PERMETTANT DE FAIRE FONCTIONNER UN VÉHICULE À MOTEUR ET VÉHICULE À MOTEUR

(30) Priorität: 06.08.2021 DE 102021120530
(43) Veröffentlichungstag der Anmeldung: 12.06.2024
(73) Patentinhaber: AUDI AG, 85057 Ingolstadt (DE)
(72) Erfinder: RESCHKE, Johannes, 84085 Langquaid (DE); THOMAS, Werner, 85126 Münchsmünster (DE)
(74) Vertreter: Lindner Blaumeier Patent- und Rechtsanwälte
(86) Internationale Anmeldenummer: PCT/EP2022/071204
(87) Internationale Veröffentlichungsnummer: WO 2023/012028

(56) Entgegenhaltungen:
- DE-B4- 102008 020 728
- FR-A1- 3 049 526
- JP-A- 2006 171 831
- JP-A- 2011 207 348
- JP-A- 2020 071 790
- US-A1- 2013 093 890
- US-A1- 2019 066 510

## Beschreibung

Die Erfindung betrifft ein Verfahren zum Betrieb eines Kraftfahrzeugs, insbesondere eines Personenkraftwagens, wobei das Kraftfahrzeug eine Kommunikationseinrichtung zum Empfang von von einer Ampel ausgesendeten, die Ampelschaltung der Ampel betreffenden Ampelinformationen und eine wenigstens eine Fahrzeugleuchte aufweisende, dem Heck oder der Front oder den Fahrzeugseiten zugeordnete Fahrzeugleuchtenanordnung aufweist, wobei jede Fahrzeugleuchte zur Umsetzung einer auf den Betrieb des Kraftfahrzeugs bezogenen Betriebslichtfunktion verwendet wird. Daneben betrifft die Erfindung ein Kraftfahrzeug.

In modernen Kraftfahrzeugen werden immer häufiger Kommunikationseinrichtungen vorgesehen, die es ermöglichen, mit anderen Verkehrsteilnehmern (Kraftfahrzeug-zu-Kraftfahrzeug-Kommunikation) beziehungsweise mit Infrastruktureinrichtungen (Kraftfahrzeug-zu-X-Kommunikation) in der Umgebung des Kraftfahrzeugs Informationen auszutauschen, insbesondere gemäß einem Kraftfahrzeug-zu-Kraftfahrzeug-Kommunikationsstandard. Solche Kommunikationsarten werden häufig auch als Car-to-Car (C2C)- beziehungsweise Car-to-X (C2X)-Kommunikation oder Vehicle-to-Vehicle (V2V)-beziehungsweise Vehicle-to-X (V2X)-Kommunikation bezeichnet. Beispielsweise kann als Kommunikationsstandard ein WLAN-Standard, beispielsweise 802.11p, verwendet werden.

Eine nützliche Anwendung der Kraftfahrzeug-zu-X-Kommunikation ist die Kommunikation des Kraftfahrzeugs mit Ampeln beziehungsweise allgemein der Erhalt von Ampelinformationen, die deren Ampelschaltung betreffen. Beispiele für solche Ampelfunktionen sind die Zeitdauer bis zur nächsten Grünschaltung, die Dauer von Ampelphasen und insbesondere Informationen, die es im Kraftfahrzeug ermöglichen, eine sogenannte "grüne Welle" zu nutzen, mithin eine Geschwindigkeit zu wählen, bei der die passierten Ampeln grün zeigen. Das Kraftfahrzeug, welches die Ampelinformation empfängt, kann eine Steuereinrichtung aufweisen, die beispielsweise wenigstens teilweise die Darstellung der Ampelinformationen oder aus den Ampelinformationen abgeleiteter Ableitungsinformationen auf Anzeigemitteln im Inneren des Kraftfahrzeugs bewirkt, beispielsweise mittels einer Mensch-Maschine-Schnittstelle (HMI - Human Machine Interface). Eine Ableitungsinformation kann beispielsweise eine für eine grüne Welle geeignete Geschwindigkeit enthalten; derartiges kann jedoch auch bereits von der Ampel selbst beziehungsweise einer zugeordneten Sendeeinrichtung übermittelt werden. Die Bereitstellung einer für eine grüne Welle geeigneten Geschwindigkeit an den Fahrer wird auch als "Ampelphasenassistent" bezeichnet. Ampelinformationen können jedoch auch im Hinblick auf andere Kraftfahrzeugsysteme genutzt werden, beispielsweise bei Start-Stop-Systemen zur Vorbereitung eines Motorstarts oder dergleichen.

Bei derartigen Funktionen, um Ampelinformationen zu empfangen und zu verwenden, handelt es sich um Ausstattungsmerkmale, die nicht allen Verkehrsteilnehmern zur Verfügung stehen. Daher kann nur ein beschränkter Anteil des Verkehrs die Tatsache nutzen, dass Ampeln beziehungsweise diesen zugeordnete Sendeeinrichtungen Ampelinformationen bereitstellen.

DE 10 2014 226 886 A1 betrifft ein Verfahren und eine Vorrichtung zur Steuerung des Verkehrsflusses, wobei als eine der Kernanwendungen bei V2X der Ampelphasenassistent dargestellt wird, dort auch bezeichnet als "Green Light Optimal Speed Advisory - GLOSA". Es wird erkannt, dass aus solchen und anderen empfangenen Infrastrukturinformationen eine Änderung des Fahrverhaltens resultieren kann, weswegen vorgeschlagen wird, bei einer Änderung des Fahrverhaltens eine nach außen sichtbare Visualisierung auszugeben, die anzeigen soll, dass diese Änderung des Fahrverhaltens nachvollziehbar ist.

DE 10 2019 200 215 A1 betrifft ein fahrzeugübergreifendes Kommunikationssystem, bei dem im Wesentlichen vorgesehen ist, beim drahtlosen Übersenden einer Nachricht zwischen Fahrzeugen das sendende Fahrzeug für den Empfänger optisch zu kennzeichnen, so dass dieser erkennen kann, von wo die Nachricht gesendet wurde.

DE 30 03 346 A1 betrifft eine Vorrichtung für eine Hinweisübermittlung von Fahrzeug zu Fahrzeug im Straßenverkehr, bei der Begriffe wie " Ihr Fahrzeug ist defekt" und "Verzeihung" mit entsprechenden Mitteln beziehungsweise Elementen über eine automatisch in die "Aus"-Stellung zurückfallende Hand- beziehungsweise Finger- und/oder Fußsteuerung signalisiert werden können.

US 10,529,229 B2 offenbart eine Fahrzeugbeleuchtungsanordnung, die mit einem Verkehrssystem verbunden ist. Dabei wird ein drahtloses Signal von einer Verkehrssteuereinrichtung, die eine Ampel sein kann, empfangen, woraufhin die Kraftfahrzeugbeleuchtungsanordnung zur Erzeugung eines Lichteffekts angesteuert wird, der mit einem entsprechenden Lichteffekt der Verkehrssteuereinrichtung synchronisiert ist. Insbesondere kann der Lichteffekt einen Countdown bis zu einem Wechsel des Zustands der Verkehrssteuereinrichtung enthalten. Dabei richtet sich die Ausgabe am Kühlergrill des Kraftfahrzeugs an gegebenenfalls abgelenkte Fußgänger.

US 10,152,886 B2 betrifft ein Ampel-Warnsystem für ein Fahrzeug, wobei mittels einer Kamera die Ampel aufgenommen wird und aus den aufgenommenen Bildern ein Signalzustand der Ampel gefolgert wird. Eine Displayeinrichtung im Kraftfahrzeug kann eine entsprechende Icon-artige Ampelrepräsentation darstellen. Hierbei kann insbesondere auch VLC genutzt werden. Die Orientierung der Ampelrepräsentation auf dem Display kann abhängig von der Region zwischen horizontal und vertikal geändert werden.

US 2021/0174673 A1 betrifft eine Präsentationsvorrichtung für Informationen eines autonom fahrenden Fahrzeugs. Empfangene Ampelinformationen werden in eine Ausgabe am Heck des Kraftfahrzeugs umgewandelt, die eine Halteinstruktion, eine Warnung zum Weiterfahren oder eine Erlaubnis zum Weiterfahren umfassen können.

WO 2010/066245 A1 betrifft eine organische Leuchtdiode und Beleuchtungsmittel mit solchen organischen Leuchtdioden, wobei es sich bei den Beleuchtungsmitteln insbesondere um folgende Vorrichtungen oder Teile folgender Vorrichtungen handeln kann: Wecker, Duschkabine, Duschkopf, Sonnenschutz, Regenschutz, Lampe, Tasche, Signalleuchte, Umkleidekabine, Sichtschutz, Häusung, Notbeleuchtung, Spiegel, Fliese, Deckenleuchte, Heizkörperverkleidung, Jalousie, Lärmschutz, Regenschirm und Warnlicht. Das Beleuchtungsmittel kann auch in das Fenster eines Kraftfahrzeugs integriert sein oder eine Anzeigevorrichtung oder ein Signallicht eines Kraftfahrzeugs bilden.

US 2019/0066510 A1 betrifft einen Computer, der programmiert ist, einen Zielbereich zu bestimmen, in den ein Symbol basierend auf der Detektion eines Zielobjekts projiziert wird. Das Symbol, welches projiziert wird, kann beispielsweise den Zustand einer Ampel beschreiben, um beispielsweise unaufmerksame Fußgänger auf diese hinzuweisen.

US 8,395,522 B2 offenbart eine Informationsdisplayvorrichtung und ein zugehöriges Verfahren. Dabei wird einem Benutzer erlaubt, gemütlich und sicher zu fahren, indem Sendeinformationen eines Anrufers mittels einer Displayeinheit, insbesondere einem Head-Up-Display, auf eine Windschutzscheibe des Fahrzeugs projiziert werden. Die Darstellung erfolgt dabei auf Grundlage der Fahrzeuggeschwindigkeit.

US 2013/0093890 A1 betrifft ein Fahrzeugdatenkommunikations- und Displaysystem. Mittels einer Kommunikationseinrichtung werden Daten von wenigstens einer kraftfahrzeugexternen Datenquelle empfangen. Mittels eines Controllers kann eine Fahrzeugdisplayeinrichtung basierend auf Daten, die von der Kommunikationseinrichtung erhalten wurden, gesteuert werden. Insbesondere werden dabei Informationen über eine Ampel empfangen und innerhalb des Kraftfahrzeugs dargestellt. Der Erfindung liegt die Aufgabe zugrunde, eine neuartige, verbesserte Nutzungsmöglichkeit für Ampelinformationen anzugeben, von der insbesondere auch umliegender Verkehr profitieren kann.

JP 2006/171831 A betrifft eine Ampel-Statusdisplayeinrichtung, welche Anzeigestatusermittlungsmittel zur Ermittlung des Anzeigestatus der Ampel, Mittel zur Bestimmung, ob der Anzeigezustand erhalten wurde, und Anhalteermittlungsmittel umfasst. Die Anhalteermittlungsmittel bestimmen, ob das Kraftfahrzeug im Stillstand ist oder nicht. Anzeigemittel sind im Fahrzeug installiert, um den Anzeigezustand an Fahrzeuge oder Fußgänger um das Fahrzeug anzuzeigen, wenn festgestellt wurde, dass das Fahrzeug stillsteht und der Anzeigezustand erhalten wurde. So sollen beispielsweise andere Verkehrsteilnehmer feststellen können, dass das Kraftfahrzeug lediglich angehalten und nicht geparkt ist und den Grund des Anhaltens feststellen.

FR 3 049 526 A1 offenbart ein Verfahren zum Steuern von Anzeigemitteln eines Kraftfahrzeugs, die einen Display-Bereich, der von außerhalb des Fahrzeugs sichtbar ist, umfassen, wobei auf dem Display-Bereich Piktogramme von einer Liste verschiedener vordefinierter Piktogramme dargestellt werden, wobei jedes Piktogramm eines bestimmte Situation repräsentiert. Es wird vorgeschlagen, ein Signal, das eine bestimmte Situation anzeigt, zu empfangen und ein entsprechendes Piktogramm, das diese Situation repräsentiert, anzuzeigen.

DE 10 2008 020 728 A1 betrifft ein Verkehrszeichenassistenzsystem zum Einbau in ein Fahrzeug, welches drahtlos mit Verkehrszeichen kommunizieren kann und Anzeigemittel aufweist, die das Verkehrszeichen zum Vermitteln von Informationen anzeigen können.

JP 2020 071790 A betrifft eine Verkehrssicherheitseinrichtung, bei der eine Verkehrssituation erkannt werden kann und mittels eines Präsentationsmittels einem Zielobjekt weitergegeben werden kann, sodass sogar im toten Winkel Verkehrssituationen erkannt werden können.

JP 2011 207348 A offenbart ein Fahrzeuglampensystem, welches die Fahrsicherheit erhöhen soll. Hierzu wird eine Lampe in Abhängigkeit einer Verkehrsinformation geschaltet, welche Ampeln und Verkehrsschilder vor dem Fahrzeug betreffen kann.

US 2013 / 009 3890 A1 betrifft ein Fahrzeugdatenkommunikations- und -darstellungssystem, wobei Daten von einer außerhalb des Kraftfahrzeugs befindlichen Datenquelle erhalten werden und entsprechende Informationen, insbesondere einer Ampelschaltung, innerhalb des Kraftfahrzeugs dargestellt werden.

US 2019 / 006 510 A1 offenbart eine fahrzeugbasierte Bildprojektion, bei der ein Zielbereich ermittelt wird, auf den während einer Fahrt ein Symbol bezüglich der Detektion eines Zielobjekts projiziert werden soll. Eine Lichtquelle wird zur Projektion des Symbols angesteuert.

Zur Lösung dieser Aufgabe sind bei einem Verfahren der eingangs genannten Art erfindungsgemäß die Merkmale des Anspruchs 1 vorgesehen.

Zumindest Teilinformationen der Ampelinformationen beziehungsweise Ableitungsinformationen können mittels der Fahrzeugleuchtenanordnung an andere Verkehrsteilnehmer weitergegeben werden, so dass die anderen Verkehrsteilnehmer, insbesondere andere Fahrer, ebenso von diesen Ampelinformationen profitieren können. Dabei wird als Teilinformation bevorzugt eine Zeitdauer bis zu einer Grünschaltung und/oder eine eine grüne Welle erlaubende Idealgeschwindigkeit mittels der Fahrzeugleuchtenanordnung angezeigt. So können andere Fahrer über zeitnahe Änderungen der Ampelschaltung und/oder die optimale Geschwindigkeit für eine grüne Welle informiert werden. Bei der eine grüne Welle erlaubenden Idealgeschwindigkeit kann es sich im Übrigen um eine beispielhafte, kraftfahrzeugunabhängige Ableitungsinformation handeln, es kann jedoch auch vorgesehen sein, dass diese Idealgeschwindigkeit bereits mit den Ampelinformationen bereitgestellt wird.

Durch die "Weitergabe" von Ampelinformationen beziehungsweise Ableitungsinformationen an andere, insbesondere wenigstens den nachfolgenden, Verkehrsteilnehmer wird dessen Informationsbasis deutlich verbessert, woraus auch eine Verbesserung des Verkehrsflusses folgt, was insbesondere auch zu einer Reduzierung des Kohlendioxidausstoßes führt. Zudem ist auf diese Weise eine positivere Präsentation von Kraftfahrzeugen des entsprechenden Herstellers im Straßenverkehr möglich.

Dabei wird mithin ausgenutzt, dass es in modernen Kraftfahrzeugen als optionale Ausstattung die Möglichkeit gibt, Ampelinformationen zu empfangen und innerhalb des Kraftfahrzeugs zu nutzen. Hierbei kann beispielsweise vorgesehen sein, dass die Ampelinformation wenigstens teilweise auf einer Mensch-Maschine-Schnittstelle im Innenraum des Kraftfahrzeugs dem Fahrer angezeigt wird. Beispielsweise kann über das sogenannte Kombiinstrument, insbesondere also an einer Instrumententafel, eine empfohlene Idealgeschwindigkeit angezeigt werden, um in einer grünen Welle zu fahren, oder es kann empfohlen werden, frühzeitig zu verzögern, weil die Ampel nicht mehr in der Grünphase angefahren werden kann. Zusätzlich oder alternativ kann dem Fahrer die Dauer bis zur Umschaltung von Rot auf Grün angezeigt werden. Derart ausgebildete Fahrerassistenzsysteme können beispielsweise als Ampelphasenassistent oder "Ampelinfo-Online" bezeichnet werden.

Erfindungsgemäß ist nun vorgesehen, diese, aktuell dem Fahrer vorbehaltene Ampelinformation beziehungsweise Ableitungsinformationen mittels einer Visualisierung in wenigstens einer Richtung, bevorzugt wenigstens im Heck des Kraftfahrzeugs, zumindest teilweise auch anderen Verkehrsteilnehmern bereitzustellen. Dafür können, worauf im Folgenden noch näher eingegangen werden wird, bereits bestehende, insbesondere einer sonstigen Betriebslichtfunktion zugeordnete Fahrzeugleuchten, beispielsweise Heckleuchten, eingesetzt werden, wobei es jedoch auch zweckmäßig sein kann, zusätzliche Anzeigevorrichtungen beziehungsweise Leuchten, beispielsweise Displays und/oder Projektionssysteme, einzusetzen.

Die Kommunikation mit der Ampel (beziehungsweise einer der Ampel zugeordneten Sendeeinrichtung) kann bevorzugt gemäß einem Kraftfahrzeug-zu-Kraftfahrzeug-Kommunikationsstandard, insbesondere einem WLAN-Standard wie 802.11p, erfolgen. In diesem Zusammenhang kann die Kommunikationseinrichtung selbstverständlich auch ausgebildet sein, neben den Ampelinformationen weitere Kommunikationsinformationen zu empfangen, beispielsweise von anderen Kraftfahrzeugen und/oder anderen Kommunikationseinrichtungen. Ampelinformationen werden von der Kommunikationseinrichtung an die das Verfahren durchführende Steuereinrichtung weitergeleitet, welche insbesondere ein die Ampelinformationen nutzendes Fahrerassistenzsystem (beispielsweise Ampelphasenassistent beziehungsweise "Ampelinfo-Online") realisiert, wo sie nicht nur für die Anzeige gegenüber dem Fahrer und gegebenenfalls sonstige Zwecke eingesetzt werden, sondern eben auch verarbeitet werden, um eine entsprechende Ansteuerung der Fahrzeugleuchtenanordnung zu bewirken. Beispielsweise kann die wenigstens eine Teilinformation genutzt werden, um entsprechende Ansteuersignale für die Fahrzeugleuchtenanordnung zu generieren.

In einer zweckmäßigen Weiterbildung der vorliegenden Erfindung kann vorgesehen sein, dass die Fahrzeugleuchtenanordnung unabhängig ansteuerbare Leuchtsegmente umfasst, wobei zumindest ein erster Anteil der Leuchtsegmente zur Ausgabe der wenigstens einen Teilinformation angesteuert wird. Mithin kann vorgesehen sein, die Teilinformation beispielsweise durch Weg-/Hinzuschalten einzelner Leuchtsegmente der Fahrzeugleuchtenanordnung zu visualisieren. Derartige Leuchtsegmente können unterschiedliche Größen aufweisen, so dass insbesondere hinreichend kleine Leuchtsegmente beispielsweise Pixel beziehungsweise Bildpunkte eines Displays bilden können, mithin über die Verwendung solcher Leuchtsegmente auch eine displayartige Darstellung komplexerer Informationen, beispielsweise von Symbolen, Zahlen, Buchstaben und/oder dergleichen erfolgen kann.

In einer besonders zweckmäßigen Ausgestaltung kann vorgesehen sein, dass ein zweiter, nicht mit dem ersten Anteil überlappender, insbesondere vollständig von wenigstens einer der einer bestimmten Betriebslichtfunktion zugeordneten wenigstens einen Fahrzeugleuchte umfasster, Anteil der Leuchtsegmente zur Bereitstellung der der Fahrzeugleuchte zugeordneten Betriebslichtfunktion, insbesondere einer Schlusslichtfunktion und/oder einer Positionslichtfunktion und/oder einer Tagfahrlichtfunktion, des Kraftfahrzeugs verwendet wird. Das bedeutet, ein nicht für die Visualisierung der wenigstens einen Teilinformation zu nutzender zweiter Anteil der Leuchtsegmente kann fest der Bereitstellung einer Schlusslichtfunktion des Kraftfahrzeugs zugeordnet sein. Dabei kann insbesondere vorgesehen sein, dass der zweite Anteil der Leuchtsegmente zur Erfüllung wenigstens einer vorgegebenen Lichtwertanforderung für die Betriebslichtfunktion angesteuert wird. Derartige Lichtwertanforderungen können derart formuliert sein, dass die Betriebslichtfunktion ihren Zweck erfüllend realisiert ist, mithin beispielsweise als Schlussleuchten verwendete Heckleuchten des Kraftfahrzeugs bei entsprechenden Bedingungen hinreichend deutlich erkennbar sind. Lichtwertanforderungen können sich zudem aus gesetzlichen Vorgaben ergeben. Beispielsweise kann hierdurch eine entsprechend notwendige Lichtstärke sichergestellt werden. Mit anderen Worten kann ein konstanter Leuchtanteil geschaffen werden, nämlich der zweite Anteil der Leuchtsegmente, der die Lichtwertanforderungen erfüllt, während ein variabler, zweiter Anteil zur Visualisierung der wenigstens einen Teilinformation dient. Auf diese Weise ist die Weitergabe von Ampelinformationen und/oder Ableitungsinformationen ohne Beeinträchtigung der Betriebslichtfunktion, beispielsweise einer heckseitig üblicherweise vorgesehenen Schlusslichtfunktion, möglich.

Vorzugsweise können wenigstens teilweise als Leuchtsegmente des ersten Anteils Leuchtsegmente der wenigstens einen Fahrzeugleuchte und/oder einer dedizierten, der Anzeige der wenigstens einen Teilinformation zugeordneten Anzeigeeinrichtung, insbesondere eines Informationsdisplays, und/oder Projektionssegmente einer Projektionseinrichtung verwendet werden. Ersichtlich bestehen also, je nach den Anforderungen, verschiedene Möglichkeiten mit verschiedenen Vorteilen. Werden beispielsweise ausschließlich Leuchtsegmente bereits bestehender Fahrzeugleuchten, beispielsweise also der Heckleuchte und/oder wenigstens einer anderen Funktionsleuchte, genutzt, ist es möglich, die wenigstens eine Teilinformation ohne Erweiterung der Fahrzeugleuchtenanordnung zu visualisieren. Dabei wird ausgenutzt, dass segmentierte Fahrzeugleuchten, beispielsweise Heckleuchten, im Stand der Technik bereits vorgeschlagen wurden und in modernen Kraftfahrzeugen auch oft eingesetzt werden. Diese sind insbesondere derart ausgelegt, dass nicht alle der Leuchtsegmente benötigt werden, um die Lichtwertanforderungen zu erfüllen, so dass mithin eine Flexibilität bereitgestellt wird, die auch zur wenigstens teilweisen Visualisierung der wenigstens einen Teilinformation vorteilhaft genutzt werden kann.

Daneben kann es selbstverständlich auch denkbar sein, zusätzliche Anzeigevorrichtungen beziehungsweise Projektionsvorrichtungen im Rahmen des erfindungsgemäßen Verfahrens bereitzustellen und einzusetzen, wobei es dann erfindungsgemäß bevorzugt ist, als Anzeigeeinrichtung wenigstens ein Informationsdisplay hinzuzufügen, welches beispielsweise benachbart wenigstens einer der wenigstens einen Fahrzeugleuchte angeordnet werden kann. Gerade bei einer solchen benachbarten oder auch wenigstens teilweise umschlossenen Anordnung der Anzeigeeinrichtung, insbesondere des Informationsdisplays, ist eine besonders vorteilhafte Kombination von Leuchtsegmenten der Anzeigeeinrichtung und der Heckleuchte und/oder Funktionsleuchte zur Bildung des ersten Anteils möglich. Ein Informationsdisplay kann beispielsweise eine besser aufgelöste Informationswiedergabe bereitstellen, beispielsweise zur hervorragend lesbaren Darstellung von Zahlen, Symbolen und/oder Buchstaben, beispielsweise der Idealgeschwindigkeit.

Eine vorteilhafte, konkrete Technologie, in der die Leuchtsegmente bereitgestellt werden können, ist die OLED-Technologie. Mithin kann vorgesehen sein, dass die Leuchtsegmente wenigstens teilweise durch OLED-Segmente gebildet werden. In der OLED-Technik sind auch Informationsdisplays verfügbar, welche als dedizierte Anzeigeeinrichtung verwendet werden können.

Gemäß der Erfindung ist vorgesehen, dass zumindest eine Aktivierung und/oder Deaktivierung der Anzeige der wenigstens einen Teilinformation nur gemeinsam mit einer Änderung bezüglich wenigstens einer der wenigstens einen Betriebslichtfunktion, insbesondere einer Fahrtrichtungsanzeigerfunktion und/oder der Schlusslichtfunktion und/oder der Positionslichtfunktion und/oder der Tagfahrlichtfunktion und/oder einer Bremslichtfunktion, erfolgt, so dass die Aktivierbarkeit und/oder Deaktivierbarkeit der Anzeige auf das Vorliegen einer Veränderung hinsichtlich der Betriebslichtfunktion eingeschränkt wird. In Ausführungsbeispielen kann zumindest die Aktivierung und/oder Deaktivierung der Anzeige der wenigstens einen Teilinformation nur gemeinsam mit einer Änderung bezüglich wenigstens einer der wenigstens einen Betriebslichtfunktion und im Stillstand des Kraftfahrzeugs erfolgen. Eine Änderung der Anzeige der wenigstens einen Teilinformation erfolgt also lediglich gemeinsam mit einer solchen Änderung. Tritt eine Änderung hinsichtlich einer auf den Betrieb des Kraftfahrzeugs bezogenen Lichtfunktion auf, wird die Aufmerksamkeit des weiteren, beispielsweise nachfolgenden, Verkehrsteilnehmers ohnehin auf das Kraftfahrzeug gerichtet, so dass er auch die wenigstens eine Teilinformation problemlos wahrnehmen kann. Zum anderen kann eine Einschränkung der Aktivierbarkeit beziehungsweise Deaktivierbarkeit der Anzeige der wenigstens einen Teilinformation auf das Vorliegen einer Veränderung hinsichtlich einer betriebsrelevanten Lichtfunktion Irritationen bei weiteren, beispielsweise nachfolgenden, Verkehrsteilnehmern reduzieren, wenn dieser beispielsweise Veränderungen in der Beleuchtung des voranfahrenden Kraftfahrzeugs grundsätzlich mit der Mitteilung von Veränderungen in dessen Betrieb assoziiert. Zudem können auf diese Art auch gegebenenfalls vorhandene beziehungsweise gesetzlich festgeschriebene Zulassungsvoraussetzungen erfüllt werden, wonach sich beispielsweise Signaturen, die sich durch Fahrzeugleuchtenanordnungen ergeben, nur dann ändern sollen, wenn eine auf den Betrieb des Kraftfahrzeugs bezogene Lichtfunktion eine Änderung herbeiführt oder aber sich das Kraftfahrzeug im Stillstand befindet. Auch im Stillstand bietet sich eine hervorragende Gelegenheit zur Aktivierung und/oder Deaktivierung, insbesondere nachdem dieser bei einer Ampel in der Rotphase ohnehin häufig auftritt. Der im Prinzip nichts von dem voranfahrenden Kraftfahrzeug erwartende weitere, beispielsweise nachfolgende, Verkehrsteilnehmer wird durch die Aktivierung auf das Kraftfahrzeug aufmerksam und wird intuitiv die wenigstens eine Teilinformation erfassen. Zudem wird er sich ohnehin selbst vermutlich im Stillstand befinden, so dass auch eine äußerst sichere Visualisierung bereitgestellt ist.

Als zweckmäßig zu übermittelnde Teilinformation haben sich, wie bereits angedeutet, eine Zeitdauer bis zu einer Grünschaltung und/oder eine eine grüne Welle erlaubende Idealgeschwindigkeit erwiesen. **In** konkreter, vorteilhafter Ausgestaltung kann in diesem Zusammenhang vorgesehen sein, dass die Zeitdauer als ein Countdown angezeigt wird, insbesondere mittels hinzukommender und/oder wegfallender Leuchtsegmente und/oder nach Art einer, insbesondere invertierten, Fortschrittsanzeige. Beispielsweise kann eine Mehrzahl von Leuchtsegmenten als zur Visualisierung dieser Teilinformation zu verwendender erster Anteil definiert werden, welche dann zur grünen Phase hin nacheinander, insbesondere nach Art einer Fortschrittsanzeige, zugeschaltet beziehungsweise abgeschaltet werden. Die Anzahl der hier verwendeten Leuchtsegmente kann beispielsweise mehr als drei und/oder weniger als zehn betragen. In einer konkreten Ausgestaltung kann vorgesehen sein, dass bei einer Zeitdauer bis zu einer Grünschaltung von weniger als 10 Sekunden ein erstes Leuchtsegment zugeschaltet wird, bei einer Zeitdauer von weniger als 7,5 Sekunden ein zweites Leuchtsegment und bei einer Zeitdauer von weniger als 4 Sekunden ein drittes Leuchtsegment.

Hinsichtlich der Idealgeschwindigkeit wird es bevorzugt, beispielsweise unter Nutzung eines Informationsdisplays oder von Leuchtsegmenten einer Heck- und/oder Funktionsleuchte hoher Auflösung, eine entsprechende Zahl zu visualisieren, bevorzugt nebst einem zugeordneten, die grüne Welle anzeigenden Symbol. In einer konkreten Ausgestaltung kann beispielsweise nach der Anzeige der Zeitdauer bis zur Grünschaltung im selben Anzeigebereich danach die auf die Idealgeschwindigkeit bezogene Teilinformation ausgegeben werden, so dass praktisch unmittelbar die logische "Folgeinformation" weitergegeben wird.

Zweckmäßigerweise kann die wenigstens eine Teilinformation in einer für wenigstens eine der wenigstens einen Betriebslichtfunktion genutzten Farbe, insbesondere für die Schlusslichtfunktion rot, dargestellt werden. Auf diese Weise wird die wenigstens eine Teilinformation auf eine sich optisch in das Gesamtbild einfügende und wenig unruhige Art weitergegeben, wobei zudem gegebenenfalls existierende Vorgaben hinsichtlich auf bestimmten Seiten des Kraftfahrzeugs zu verwendenden Farben eingehalten werden können.

Neben dem Verfahren betrifft die Erfindung auch ein Kraftfahrzeug, insbesondere einen Personenkraftwagen, wobei das Kraftfahrzeug eine Kommunikationseinrichtung zum Empfang von von einer Ampel ausgesendeten, die Ampelschaltung der Ampel betreffenden Ampelinformationen, eine wenigstens eine Fahrzeugleuchte aufweisende, dem Heck oder der Front oder den Fahrzeugseiten zugeordnete Fahrzeugleuchtenanordnung, wobei jede Fahrzeugleuchte zur Umsetzung einer auf den Betrieb des Kraftfahrzeugs bezogenen Betriebslichtfunktion verwendet wird, und eine Steuereinrichtung aufweist, welche sich dadurch auszeichnet, dass die Steuereinrichtung zur Durchführung des erfindungsgemäßen Verfahrens ausgebildet ist. Sämtliche Ausführungen bezüglich des erfindungsgemäßen Verfahrens lassen sich analog auf das erfindungsgemäße Kraftfahrzeug übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Kraftfahrzeugs,
- Fig. 2: schematisch eine Fahrzeugleuchtenanordnung gemäß einem ersten Ausführungsbeispiel,
- Fig. 3 bis 6: verschiedene Erscheinungsbilder der Fahrzeugleuchtenanordnung zur Anzeige einer Zeitdauer bis zu einer Grünschaltung,
- Fig. 7: ein Erscheinungsbild der Fahrzeugleuchtenanordnung zur Anzeige einer Idealgeschwindigkeit,
- Fig. 8: schematisch eine Fahrzeugleuchtenanordnung gemäß einem zweiten Ausführungsbeispiel, und
- Fig. 9: eine schematische Ansicht einer den Seiten des Kraftfahrzeugs zugeordneten Fahrzeugleuchtenanordnung.

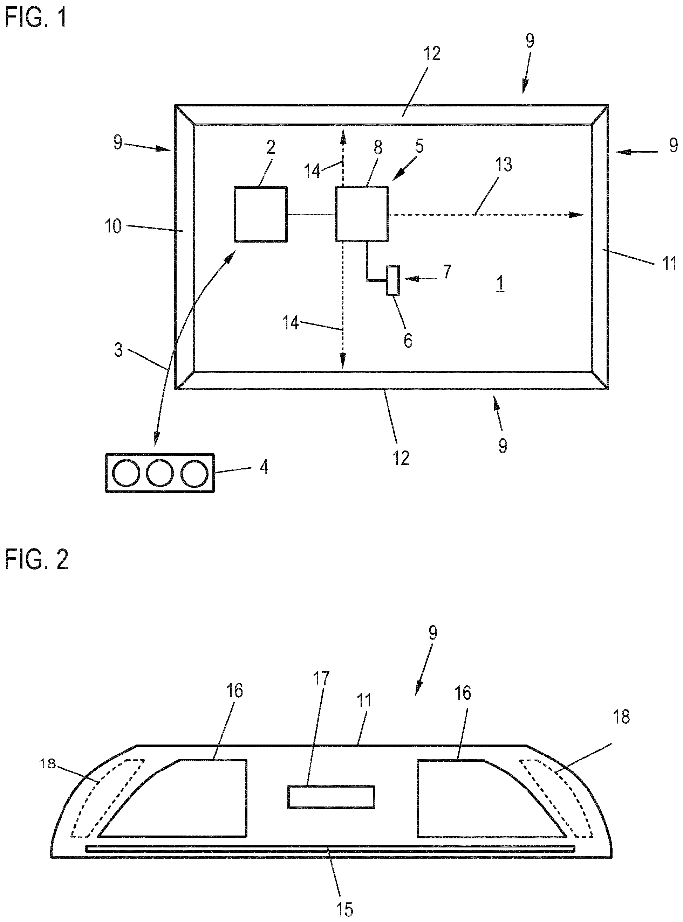

Fig. 1 zeigt eine Prinzipskizze eines erfindungsgemäßen Kraftfahrzeugs 1. Das Kraftfahrzeug 1 weist eine Kommunikationseinrichtung 2 zur Kommunikation gemäß einem Kraftfahrzeug-zu-Kraftfahrzeug-Kommunikationsstandard, beispielsweise 802.11p, auf. Insbesondere wird es dem Kraftfahrzeug 1 durch die Kommunikationseinrichtung 2 ermöglicht, wie durch den Pfeil 3 angedeutet, Ampelinformationen von einer hier nur angedeuteten Ampel 4 zu empfangen. Die Ampelinformationen umfassen insbesondere Informationen zum zeitlichen Ablauf der Ampelschaltung, beispielsweise zu den Umschaltzeitpunkten und zur Dauer der jeweiligen Ampelphasen, insbesondere der Rotphase und der Grünphase. Die Ampelinformationen können optional auch, insbesondere abgestimmt auf weitere Ampeln 4, Informationen zu einer Idealgeschwindigkeit zum Erreichen einer grünen Welle enthalten; anderenfalls können derartige Idealgeschwindigkeiten als Ableitungsinformationen auch aus den Ampelinformationen innerhalb des Kraftfahrzeugs 1 abgeleitet werden, beispielsweise in einer hier als Steuergerät 8 realisierten, die Ampelinformation entgegennehmenden Steuereinrichtung 5.

Die Steuereinrichtung 5 realisiert vorliegend unter anderem ein Fahrerassistenzsystem auf Basis der Ampelinformationen, beispielsweise einem Ampelphasenassistenten beziehungsweise ein "Ampelinfo-Online"-System. Hierzu werden die Ampelinformationen beziehungsweise aus den Ampelinformationen abgeleitete Ableitungsinformationen wenigstens teilweise auf einer Instrumententafel 6 als Teil einer Mensch-Maschine-Schnittstelle 7 (HMI) zur Anzeige gebracht. Dabei kann beispielsweise die Idealgeschwindigkeit als Empfehlung für eine grüne Welle ausgegeben werden und es kann dem Fahrer angezeigt werden, wie lange eine Ampel 4 noch rot ist.

Das Kraftfahrzeug 1 weist ferner noch verschiedene Fahrzeugleuchtenanordnungen 9 mit verschiedenen Fahrzeugleuchten auf, mit denen auf den Betrieb des Kraftfahrzeugs 1 bezogene Betriebslichtfunktionen umgesetzt werden. Vorliegend ist zunächst eine Frontbeleuchtungsanordnung 10, welche beispielsweise Frontscheinwerfer als Fahrzeugleuchten für ein Abblendlicht, ein Fernlicht, ein Standlicht und ein Positionsfahrlicht umfassen kann, gegebenenfalls zusätzlich auch Blinkleuchten für eine Fahrtrichtungsanzeigefunktion, gezeigt. Die Heckleuchtenanordnung 11 umfasst vorwiegend als Fahrzeugleuchte wenigstens eine Heckleuchte, die zur Realisierung einer Schlusslichtfunktion und/oder Bremslichtfunktion und/oder Positionslichtfunktion/Tagfahrlichtfunktion genutzt werden kann. Auch die Heckleuchtenanordnung 11 kann Blinkleuchten für eine Fahrtrichtungsanzeigerfunktion umfassen. Schließlich existiert noch eine den Seiten des Kraftfahrzeugs 1 zugeordnete Seitenleuchtenanordnung 12, die beispielsweise Seitenpositionsleuchten für ein Positionslicht als Fahrzeugleuchten umfassen kann.

Gemäß der vorliegenden Erfindung ist die Steuereinrichtung 5 vorliegend auch ausgebildet, wenigstens die Heckleuchtenanordnung 11, vgl. Pfeil 13, anzusteuern, um wenigstens eine Teilinformation der Ampelinformationen und/oder der Ableitungsinformationen, die im Übrigen kraftfahrzeugunabhängig sind, mittels der Heckleuchtenanordnung 11 einem nachfolgenden Verkehrsteilnehmer darzustellen. Ähnliches kann auch zusätzlich oder alternativ, aber weniger bevorzugt, vgl. Pfeile 14, durch eine Ansteuerung der Seitenleuchtenanordnung 12 zur seitlichen Darstellung der wenigstens einen Teilinformation erfolgen.

In den hier dargestellten Ausführungsbeispielen werden als Teilinformationen eine Zeitdauer bis zu einer Grünschaltung und eine eine grüne Welle erlaubenden Idealgeschwindigkeit angezeigt, wobei die Zeitdauer bevorzugt als ein Countdown angezeigt wird, die Idealgeschwindigkeit bevorzugt in Form einer Zahl, insbesondere gemeinsam mit Symbolen.

Fig. 2 zeigt eine beispielhafte Ausgestaltung der Heckleuchtenanordnung 11 in einem ersten Ausführungsbeispiel. Die Heckleuchtenanordnung 11 umfasst vorliegend drei Heckleuchten 15, 16, wobei die längliche, sich im Wesentlichen über das gesamte Heck erstreckende Heckleuchte 15 als ein LED-Band ausgebildet ist, das in Form der einzelnen LEDs unabhängig ansteuerbare Leuchtsegmente aufweist. Bei den Heckleuchten 16 handelt es sich um OLED-Leuchten einer sehr hohen Auflösung, die also als unabhängig ansteuerbare Leuchtsegmente OLED-Segmente aufweisen. Zentral ist als weitere Fahrzeugleuchte eine Positionsleuchte 17 vorgesehen; seitlich können Blinkleuchten 18 für eine Fahrtrichtungsanzeigerfunktion vorgesehen sein. Die Heckleuchten 15, 16 dienen in jedem Fall einer Schlusslichtfunktion, können aber zusätzlich auch, beispielsweise durch helleres Leuchten, einer Bremslichtfunktion, sowie einer Tagfahrlichtfunktion und einer Positionslichtfunktion dienen.

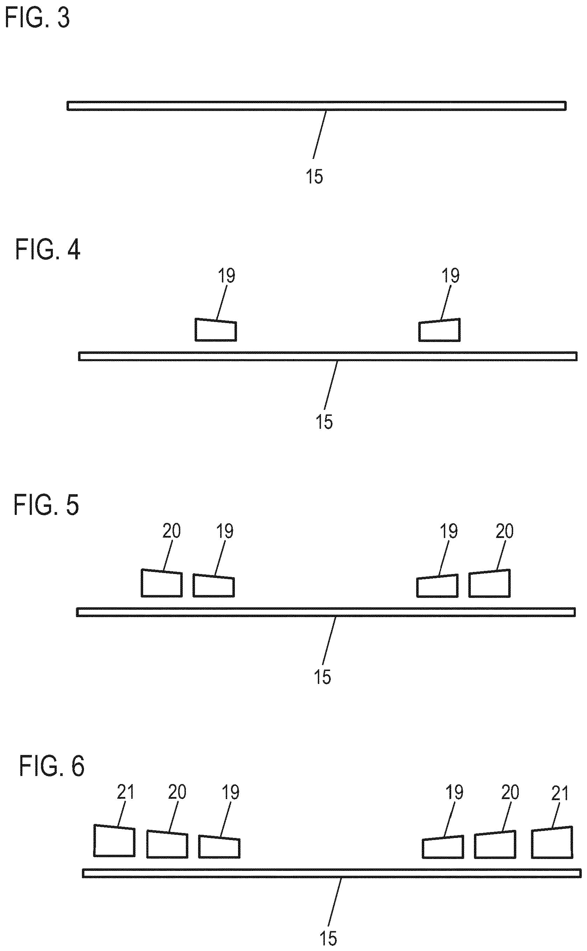

Die Figuren 3 bis 6 zeigen nun eine mögliche Anzeige der Zeitdauer bis zur Grünschaltung für einen nachfolgenden Verkehrsteilnehmer. Fig. 3 zeigt die Situation, wenn die Zeitdauer bis zur Grünschaltung noch größer als 10 Sekunden ist. Dann wird lediglich die Heckleuchte 15, vorwiegend für ihre Schlusslichtfunktion als Betriebslichtfunktion, betrieben. Die Leuchtsegmente der Heckleuchte 15 bilden dabei einen zweiten Anteil der Leuchtsegmente, der konstant zur Realisierung der Schlusslichtfunktion betrieben wird und auf diese Weise sichergestellt, dass Lichtwertanforderungen erfüllt sind, insbesondere eine gewisse Mindestlichtstärke immer gegeben ist. Die Leuchtsegmente des zweiten Anteils sind also sozusagen fest reserviert für die Betriebslichtfunktion, hier die Schlusslichtfunktion, und werden insbesondere, solange die Schlusslichtfunktion aktiv ist, konstant betrieben.

Fig. 4 zeigt das Erscheinungsbild der Heckleuchtenanordnung 11 zu einem zweiten Zeitpunkt, zu dem die Zeitdauer bis zur Grünschaltung zwischen 7,5 und 10 Sekunden beträgt. Ersichtlich sind hier bereits Leuchtsegmente 19 der Heckleuchten 16 zugeschaltet worden, um die Reduzierung der Zeitdauer gegenüber dem Zeitpunkt der Fig. 3 anzuzeigen.

Beim Erscheinungsbild der Fig. 5 ist die Zeitdauer bis zur Grünschaltung unter 7,5 Sekunden gefallen, jedoch noch größer als 4 Sekunden. Entsprechend wurden nach außen nach Art eines Fortschrittbalkens weitere Leuchtsegmente 20 der Heckleuchten 16 zugeschaltet, woraufhin bei Unterschreitung der Zeitdauer bis zur Grünschaltung von 4 Sekunden gemäß Fig. 6 auch Leuchtsegmente 21, die die so entstehende Fortschrittsanzeige nach außen abschließen, durch die Steuereinrichtung 5 zugeschaltet wurden. Ersichtlich werden die Leuchtsegmente 19, 20, 21 nach außen hin größer, um die Anmutung eines ein näher rückendes Ereignis anzeigenden Fortschrittsbalkens weiter zu erhöhen. Selbstverständlich können auch mehr als drei Leuchtsegmentgruppen für eine solche Countdown-Anzeige verwendet werden. Es sei angemerkt, dass neben dem Hinzu- oder auch Wegschalten von Leuchtsegmenten beziehungsweise Leuchtsegmentgruppen auch andere Arten eines Countdowns möglich sind, beispielsweise herunterzählende Zahlen.

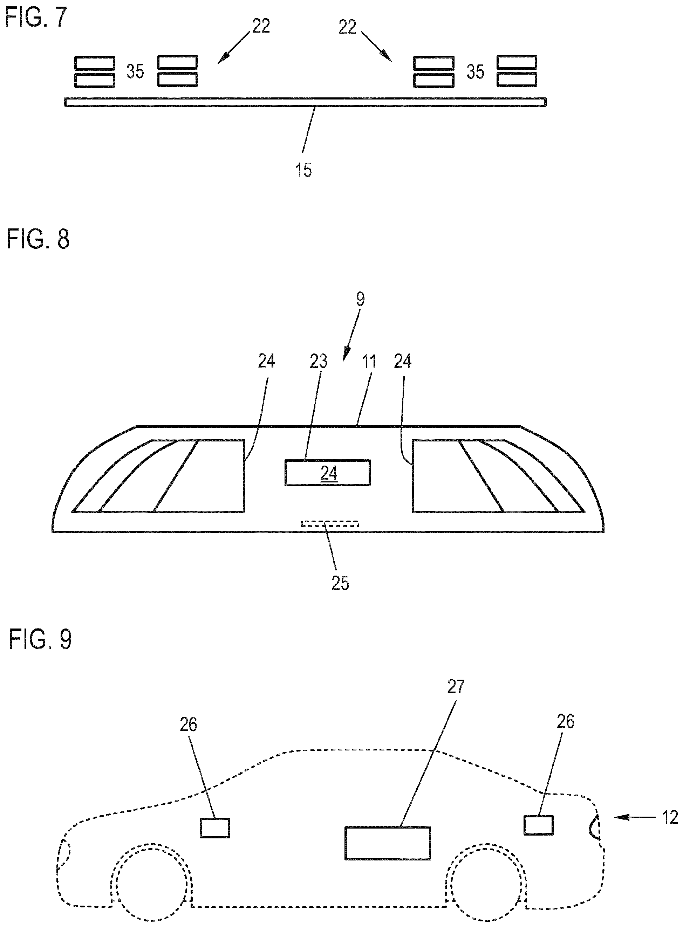

Fig.7 zeigt ein Erscheinungsbild zur Anzeige der Idealgeschwindigkeit, zu welchem beispielsweise mit Erreichen der Grünphase umgeschaltet werden kann. Die Idealgeschwindigkeit, hier 35 km/h, wird als Zahl zwischen hier nur schematisch dargestellten Symbolen angezeigt, wobei die hohe Auflösung der Heckleuchten 16 genutzt wird, um mittels entsprechender Leuchtsegmente 22 die Symbole und die Zahlen deutlich lesbar darzustellen.

Die Leuchtsegmente 19, 20, 21, 22 gehören im Übrigen einem ersten Anteil von Leuchtsegmenten der Heckleuchtenanordnung 11 an, welcher zur Darstellung der Teilinformation genutzt wird und nicht mit dem zweiten Anteil, der konstant für die Betriebslichtfunktion, hier Schlusslichtfunktion, genutzt wird, überlappt.

In anderen Ausgestaltungen, beispielsweise dem in Fig. 8 gezeigten zweiten Ausführungsbeispiel einer Heckleuchtenanordnung 11, können auch dedizierte zusätzliche Anzeigeeinrichtungen 23, hier ein Informationsdisplay 24, für die Anzeige der Teilinformationen zusätzlich hinzugefügt worden sein. Das Ausführungsbeispiel zeigt auch rein beispielhaft als Fahrzeugleuchten Kombinationsleuchten 24 mit Abschnitten für Schlussfahrlicht, Bremslicht und Blinklicht. Ferner ist eine optionale, hier nur angedeutete Projektionseinrichtung 25 gezeigt, über die Teilinformationen auch auf die Straße hinter dem Kraftfahrzeug 1 projiziert werden können, was jedoch weniger bevorzugt ist.

Es sei noch angemerkt, dass es allgemein in diesen Ausführungsbeispielen vorgesehen ist, dass eine Aktivierung und/oder Deaktivierung der Anzeige der Teilinformationen nur gemeinsam mit einer Änderung bezüglich einer Betriebslichtfunktion erfolgt. Damit können beispielsweise Irritationen des weiteren Verkehrsteilnehmers vermieden werden.

Fig. 9 zeigt schließlich beispielhaft eine mögliche Ausgestaltung einer Seitenleuchtenanordnung 12, die für jede Seite als Fahrzeugleuchten 3 Positionsleuchten 26, 27 umfasst, wobei die Positionsleuchte 27 ebenso als Leuchtsegmente aufweisende OLED-Leuchte ausgebildet ist und genutzt werden kann, um auch seitlich Teilinformationen auszugeben.

Abschließend sei noch angemerkt, dass in allen beschriebenen Ausführungsbeispielen die Teilinformationen in einer auch für räumlich anschließende Betriebslichtfunktionen genutzten Farbe angezeigt werden, für die Heckleuchtenanordnung beispielsweise in Rot, für die Seitenleuchtenanordnung 12 beispielsweise in Orange oder Gelb.

## Patentansprüche

1. Verfahren zum Betrieb eines Kraftfahrzeugs (1), insbesondere eines Personenkraftwagens, wobei das Kraftfahrzeug (1) eine Kommunikationseinrichtung (2) zum Empfang von von einer Ampel (4) ausgesendeten, die Ampelschaltung der Ampel (4) betreffenden Ampelinformationen und eine wenigstens eine Fahrzeugleuchte aufweisende, dem Heck oder der Front oder den Fahrzeugseiten zugeordnete Fahrzeugleuchtenanordnung (9) aufweist, wobei jede Fahrzeugleuchte zur Umsetzung einer auf den Betrieb des Kraftfahrzeugs (1) bezogenen Betriebslichtfunktion verwendet wird, wobei wenigstens eine Teilinformation der Ampelinformationen und/oder aus den Ampelinformationen abgeleiteter, von dem Kraftfahrzeug (1) unabhängiger Ableitungsinformationen mittels der Fahrzeugleuchtenanordnung (9) einem weiteren Verkehrsteilnehmer dargestellt wird,
**dadurch gekennzeichnet,**
**dass** zumindest eine Aktivierung und/oder Deaktivierung der Anzeige der wenigstens einen Teilinformation nur gemeinsam mit einer Änderung bezüglich wenigstens einer der wenigstens einen Betriebslichtfunktion erfolgt, so dass die Aktivierbarkeit und/oder Deaktivierbarkeit der Anzeige auf das Vorliegen einer Veränderung hinsichtlich der Betriebslichtfunktion eingeschränkt wird.

2. Verfahren nach Anspruch 1,
**dadurch gekennzeichnet,**
**dass** die Kommunikation mit der Ampel (4) gemäß einem Kraftfahrzeug-zu-Kraftfahrzeug-Kommunikationsstandard erfolgt.

3. Verfahren nach Anspruch 1 oder 2,
**dadurch gekennzeichnet,**
**dass** die Fahrzeugleuchtenanordnung (9) unabhängig ansteuerbare Leuchtsegmente (19, 20, 21, 22) umfasst, wobei zumindest ein erster Anteil der Leuchtsegmente (19, 20, 21, 22) zur Ausgabe der wenigstens einen Teilinformation angesteuert wird.

4. Verfahren nach Anspruch 3,
**dadurch gekennzeichnet,**
**dass** ein zweiter, nicht mit dem ersten Anteil überlappender, insbesondere vollständig von wenigstens einer der einer bestimmten Betriebslichtfunktion zugeordneten wenigstens einen Fahrzeugleuchte umfasster, Anteil der Leuchtsegmente (19, 20, 21, 22) zur Bereitstellung der der Fahrzeugleuchte zugeordneten Betriebslichtfunktion des Kraftfahrzeugs (1) verwendet wird.

5. Verfahren nach Anspruch 4,
**dadurch gekennzeichnet,**
**dass** der zweite Anteil der Leuchtsegmente (19, 20, 21, 22) zur Erfüllung wenigstens einer vorgegebenen Lichtwertanforderung für die Betriebslichtfunktion angesteuert wird.

6. Verfahren nach einem der Ansprüche 3 bis 5,
**dadurch gekennzeichnet,**
**dass** wenigstens teilweise als Leuchtsegmente (19, 20, 21, 22) des ersten Anteils Leuchtsegmente (19, 20, 21, 22) der wenigstens einen Fahrzeugleuchte und/oder einer dedizierten, der Anzeige der wenigstens einen Teilinformation zugeordneten Anzeigeeinrichtung (23), insbesondere eines Informationsdisplays (24), und/oder Projektionssegmente einer Projektionseinrichtung (25) verwendet werden.

7. Verfahren nach einem der Ansprüche 3 bis 6,
**dadurch gekennzeichnet,**
**dass** die Leuchtsegmente (19, 20, 21, 22) wenigstens teilweise durch OLED-Segmente gebildet werden.

8. Verfahren nach einem der vorangehenden Ansprüche,
**dadurch gekennzeichnet**,
dassdie wenigstens eine Betriebslichtfunktion eine Fahrtrichtungsanzeigerfunktion und/oder eine Schlusslichtfunktion und/oder eine Positionslichtfunktion und/oder eine Tagfahrlichtfunktion und/oder eine Bremslichtfunktion ist.

9. Verfahren nach einem der vorangehenden Ansprüche,
**dadurch gekennzeichnet,**
**dass** als Teilinformation eine Zeitdauer bis zu einer Grünschaltung und/oder eine eine grüne Welle erlaubende Idealgeschwindigkeit angezeigt wird.

10. Verfahren nach Anspruch 9,
**dadurch gekennzeichnet,**
**dass** die Zeitdauer als ein Countdown angezeigt wird, insbesondere mittels hinzukommender und/oder wegfallender Leuchtsegmente (19, 20, 21) und/oder nach Art einer, insbesondere invertierten, Fortschrittsanzeige.

11. Verfahren nach einem der vorangehenden Ansprüche,
**dadurch gekennzeichnet,**
**dass** die wenigstens eine Teilinformation in einer für wenigstens eine der wenigstens einen Betriebslichtfunktion genutzten Farbe, insbesondere für die Schlusslichtfunktion rot, dargestellt wird.

12. Verfahren nach einem der vorangehenden Ansprüche,
**dadurch gekennzeichnet,**
**dass** die Ampelinformationen und/oder Ableitungsinformationen auch wenigstens teilweise auf einer Mensch-Maschine-Schnittstelle (7) im Innenraum des Kraftfahrzeugs (1) dem Fahrer angezeigt werden.

13. Verfahren nach einem der vorangehenden Ansprüche,
**dadurch gekennzeichnet,**
**dass** zumindest die Aktivierung und/oder Deaktivierung der Anzeige der wenigstens einen Teilinformation nur gemeinsam mit einer Änderung bezüglich wenigstens einer der wenigstens einen Betriebslichtfunktion und im Stillstand des Kraftfahrzeugs (1) erfolgt.

14. Kraftfahrzeug (1), insbesondere Personenkraftwagen, wobei das Kraftfahrzeug (1) eine Kommunikationseinrichtung (2) zum Empfang von von einer Ampel (4) ausgesendeten, die Ampelschaltung der Ampel (4) betreffenden Ampelinformationen, eine wenigstens eine Fahrzeugleuchte aufweisende, dem Heck oder der Front oder den Fahrzeugseiten zugeordnete Fahrzeugleuchtenanordnung (9), wobei jede Fahrzeugleuchte zur Umsetzung einer auf den Betrieb des Kraftfahrzeugs (1) bezogenen Betriebslichtfunktion verwendet wird, und eine Steuereinrichtung (5) aufweist,
**dadurch gekennzeichnet,**
**dass** die Steuereinrichtung (5) zur Durchführung eines Verfahrens nach einem der vorangehenden Ansprüche ausgebildet ist.

## Claims

1. Method for operating a motor vehicle (1), in particular a passenger car, wherein the motor vehicle (1) has a communication device (2) for receiving traffic light information emitted by a traffic light (4) and relating to the traffic light switching of the traffic light (4) and a vehicle light arrangement (9) having at least one vehicle light and being assigned to the rear or the front or the vehicle sides, wherein each vehicle light is used to implement an operational light function related to the operation of the motor vehicle (1), wherein at least one item of partial information of the traffic light information and/or derivation information derived from the traffic light information and independent of the motor vehicle (1) is displayed to another road user by means of the vehicle light arrangement (9),
**characterized**
**in that** the display of the at least one item of partial information is only at least activated and/or deactivated together with a change with respect to at least one of the at least one operational light function, such that the ability to activate and/or deactivate the display is restricted to the presence of a change with respect to the operational light function.

2. Method according to Claim 1,
**characterized**
**in that** communication with the traffic light (4) takes place in accordance with a motor-vehicle-to-motor-vehicle communication standard.

3. Method according to Claim 1 or 2,
**characterized**
**in that** the vehicle light arrangement (9) comprises independently controllable light segments (19, 20, 21, 22), wherein at least a first portion of the light segments (19, 20, 21, 22) is controlled to output the at least one item of partial information.

4. Method according to Claim 3,
**characterized**
**in that** a second portion of the light segments (19, 20, 21, 22), which does not overlap the first portion, in particular is completely included in at least one of the at least one vehicle light assigned to a particular operational light function, is used to provide the operational light function of the motor vehicle (1) that is assigned to the vehicle light.

5. Method according to Claim 4,
**characterized**
**in that** the second portion of the light segments (19, 20, 21, 22) is controlled to meet at least one predefined light value requirement for the operational light function.

6. Method according to one of Claims 3 to 5,
**characterized**
**in that** light segments (19, 20, 21, 22) of the at least one vehicle light and/or of a dedicated display device (23) assigned to the display of the at least one item of partial information, in particular an information display (24), and/or projection segments of a projection device (25) are used at least partially as light segments (19, 20, 21, 22) of the first portion.

7. Method according to one of Claims 3 to 6,
**characterized**
**in that** the light segments (19, 20, 21, 22) are at least partially formed by OLED segments.

8. Method according to one of the preceding claims,
**characterized**
**in that** the at least one operational light function is a direction indicator function and/or a tail light function and/or a position light function and/or a daytime running light function and/or a brake light function.

9. Method according to one of the preceding claims,
**characterized**
**in that** a time period up to a switch to green and/or an ideal speed permitting a green wave is/are displayed as partial information.

10. Method according to Claim 9,
**characterized**
**in that** the time period is displayed as a countdown, in particular by means of additional and/or omitted light segments (19, 20, 21), and/or in the form of a progress display, in particular an inverted progress display.

11. Method according to one of the preceding claims,
**characterized**
**in that** the at least one item of partial information is displayed in a colour used for at least one of the at least one operational light function, in particular red for the tail light function.

12. Method according to one of the preceding claims,
**characterized**
**in that** the traffic light information and/or derivation information is also displayed at least partially to the driver on a man-machine interface (7) in the interior of the motor vehicle (1).

13. Method according to one of the preceding claims,
**characterized**
**in that** the display of the at least one item of partial information is only at least activated and/or deactivated together with a change with respect to at least one of the at least one operational light function and when the motor vehicle (1) is at a standstill.

14. Motor vehicle (1), in particular passenger car, wherein the motor vehicle (1) has a communication device (2) for receiving traffic light information emitted by a traffic light (4) and relating to the traffic light switching of the traffic light (4), a vehicle light arrangement (9) having at least one vehicle light and being assigned to the rear or the front or the vehicle sides, wherein each vehicle light is used to implement an operational light function related to the operation of the motor vehicle (1), and a control device (5),
**characterized**
**in that** the control device (5) is designed to carry out a method according to one of the preceding claims.

## Revendications

1. Procédé pour faire fonctionner un véhicule automobile (1), notamment une voiture particulière, le véhicule automobile (1) comportant un dispositif de communication (2) pour recevoir des informations de feux de signalisation émises par un feu de signalisation (4) et concernant la commutation du feu de signalisation (4), et un dispositif (9) de feux de véhicule comportant au moins un feu de véhicule, qui est associé à l'arrière ou à l'avant ou aux côtés du véhicule, chaque feu de véhicule étant utilisé pour mettre en œuvre une fonction d'éclairage de service se rapportant au fonctionnement du véhicule automobile (1), au moins une information partielle des informations de feu de signalisation et/ou des informations dérivées des informations de feu de signalisation indépendantes du véhicule automobile (1) étant présentée à un autre utilisateur de la route au moyen du dispositif (9) de feux de véhicule,
**caractérisé**
**en ce qu'**au moins une activation et/ou une désactivation de l'affichage de ladite au moins une information partielle n'a lieu qu'en même temps qu'une modification concernant au moins une desdites au moins une fonction d'éclairage de service, de sorte que l'activation et/ou la désactivation de l'affichage est limitée à la présence d'une modification concernant la fonction d'éclairage de service.

2. Procédé selon la revendication 1,
**caractérisé**
**en ce que** la communication avec le feu de signalisation (4) s'effectue selon une norme de communication véhicule-automobile-à-véhicule-automobile.

3. Procédé selon la revendication 1 ou la revendication 2,
**caractérisé**
**en ce que** le dispositif (9) de feux de véhicule comprend des segments d'éclairage (19, 20, 21, 22) aptes à être commandés indépendamment, au moins une première partie des segments d'éclairage (19, 20, 21, 22) étant commandée de manière à émettre au moins une information partielle.

4. Procédé selon la revendication 3,
**caractérisé**
**en ce qu'**une deuxième partie des segments lumineux (19, 20, 21, 22), qui ne chevauche pas la première partie et qui est notamment entièrement entourée par au moins un des feux du véhicule attribués à une fonction d'éclairage de service déterminée, est utilisée pour fournir la fonction d'éclairage de service du véhicule automobile (1) attribuée au feu du véhicule.

5. Procédé selon la revendication 4,
**caractérisé**
**en ce que** la deuxième partie des segments lumineux (19, 20, 21, 22) est commandée de manière à satisfaire au moins une exigence prédéfinie en matière de valeur lumineuse pour la fonction d'éclairage de service.

6. Procédé selon l'une des revendications 3 à 5,
**caractérisé**
**en ce qu'**au moins une partie des segments d'éclairage (19, 20, 21, 22) de la première partie est constituée par des segments d'éclairage (19, 20, 21, 22) dudit au moins un feu de véhicule et/ou d'un dispositif d'affichage (23) dédié, associé à l'affichage de ladite au moins une information partielle, en particulier d'un écran d'information (24), et/ou des segments de projection d'un dispositif de projection (25).

7. Procédé selon l'une des revendications 3 à 6,
**caractérisé**
**en ce que** les segments lumineux (19, 20, 21, 22) sont formés au moins en partie par des segments OLED.

8. Procédé selon l'une des revendications précédentes,
**caractérisé**
**en ce que** ladite au moins une fonction d'éclairage de service est une fonction d'indicateur de direction et/ou une fonction de feu arrière et/ou une fonction de feu de position et/ou une fonction de feu diurne et/ou une fonction de feu stop.

9. Procédé selon l'une des revendications précédentes,
**caractérisé**
**en ce qu'**une information partielle, à savoir une durée jusqu'au passage au vert et/ou une vitesse idéale permettant de passer au feu vert, est affichée.

10. Procédé selon la revendication 9,
**caractérisé**
**en ce que** la durée est affichée sous forme de compte à rebours, en particulier au moyen de segments lumineux (19, 20, 21) qui s'allument et/ou s'éteignent et/ou à la manière d'un indicateur de progression, en particulier inversé.

11. Procédé selon l'une des revendications précédentes,
**caractérisé**
**en ce que** ladite au moins une information partielle est représentée dans une couleur utilisée pour au moins une desdites au moins une fonction d'éclairage de service, en particulier en rouge pour la fonction de feu arrière.

12. Procédé selon l'une des revendications précédentes,
**caractérisé**
**en ce que** les informations relatives aux feux de signalisation et/ou les informations dérivées sont également affichées au moins en partie sur une interface homme-machine (7) dans l'habitacle du véhicule automobile (1) à l'intention du conducteur.

13. Procédé selon l'une des revendications précédentes,
**caractérisé**
**en ce que** l'activation et/ou la désactivation de l'affichage de ladite au moins une information partielle s'effectue uniquement conjointement avec une modification concernant au moins une desdites au moins une fonction d'éclairage de service et lorsque le véhicule automobile (1) est à l'arrêt.

14. Véhicule automobile (1), notamment voiture particulière, le véhicule automobile (1) comprenant un dispositif de communication (2) pour recevoir des informations de feux de signalisation émises par un feu de signalisation (4) et concernant la commutation du feu de signalisation (4), un dispositif (9) de feux de véhicule comportant au moins un feu de véhicule, associé à l'arrière ou à l'avant ou aux côtés du véhicule, chaque feu de véhicule étant utilisé pour mettre en œuvre une fonction d'éclairage de service liée au fonctionnement du véhicule automobile (1), et un dispositif de commande (5),
**caractérisé**
**en ce que** le dispositif de commande (5) est conçu pour mettre en œuvre un procédé selon l'une des revendications précédentes.
